# EUROPEAN PATENT SPECIFICATION

(11) **EP 3 465 161 B1**
(45) Date of publication and mention of the grant of the patent: **21.10.2020**
(21) Application number: 17807326.8
(22) Date of filing: 30.05.2017
(51) Int. Cl.: G01N 21/64, G02B 21/00, G02B 21/02, G02B 21/08, G02B 21/10, G01N 21/47

(54) **IMAGING SYSTEM WITH OBLIQUE ILLUMINATION**
ABBILDUNGSSYSTEM MIT SCHRÄGER BELEUCHTUNG
SYSTÈME D'IMAGERIE AVEC ÉCLAIRAGE OBLIQUE

(30) Priority: 31.05.2016 US 201615168612
(43) Date of publication of application: 10.04.2019
(73) Proprietor: Molecular Devices, LLC, San Jose, CA 95134 (US)
(72) Inventor: BOEGE, Steven, J., San Mateo, CA 94403 (US)
(74) Representative: Mollekopf, Gerd Willi
(86) International application number: PCT/US2017/034981
(87) International publication number: WO 2017/210180

(56) References cited:
- WO-A1-2016/032431
- JP-A- 2005 227 442
- JP-A- 2005 331 623
- US-A1- 2013 121 530
- US-A1- 2013 170 024
- US-B1- 6 444 476

## Description

Biological cells can be detected microscopically by fluorescence imaging of dye-labeled cells, or brightfield imaging of unlabeled cells, among others. These modes of imaging utilize different strategies for illuminating the cells. Fluorescence imaging usually excites fluorescence by epi-illumination, where excitation light travels to the cells, and emitted light travels from the cells, in respective opposite directions through the same objective. In contrast, transmitted light or transillumination imaging illuminates cells from the other side of the sample plane, opposite the objective. Incorporating different illumination strategies into the same microscope can increase the cost and complexity of the microscope. New approaches to illumination are needed.

US 2013/0170024 A1 provides oblique-illumination systems integrated with fluorescence microscopes and methods of using oblique illumination in fluorescence microscopy. The system comprises an objective sleeve inserted in a light ring housing. An objective is inserted in the inside of the objective sleeve and of the light ring housing through the opening. The light ring housing further consists of a cylindrical shell and a donut-shaped end. The donut-shaped end comprises a circular surface with several circularly arranged holes for light sources. The holes for the light sources extend from the end through the whole objective sleeve. A focusing lens is arranged in front of the light sources to be able to focus the light on the sample in an angle. An excitation light source additionally comprises an excitation filter to illuminate the sample with a specific wavelength to cause photoluminescence. In one embodiment, the focusing lenses of each light source can be replaced by one ring shaped lens. In another embodiment, the light sources can be arranged outside the objective sleeve and the light ring housing and the light is transmitted through said components by optical fibers coupled to the light sources. The system can be used to illuminate from any desired direction the surface of an object located at a fixed known offset away from a sample solution containing fluorescently tagged targets. Thereby, the oblique illumination is used to illuminate features of the surface while epi-illumination is used to create fluorescent light emitted from the tagged targets. The purpose is to determine the locations of the targets in the sample based on the locations of the surface features by combining the images of the oblique illumination and the epi-illumination.

### Summary

The invention is defined in claim 1. Particular embodiments are set out in the dependent claims.

The present disclosure provides an imaging system with oblique illumination. In an exemplary method of imaging, a sample may be illuminated obliquely with excitation light generated by only a subset of a plurality of light sources mounted to an annular frame. An image may be detected, with the image formed with photoluminescence induced in the sample by the excitation light and received from a central opening of the annular frame.

According to the invention, an imaging system is provided. The system comprises a stage configured to support a sample in an examination region, wherein the sample includes a photoluminescent component. The system also comprises an annular frame, an excitation filter and an illumination subsystem including a plurality of light sources mounted to the annular frame, with at least one of the light sources being an excitation source configured to generate excitation light capable of inducing the photoluminescent component to produce photoluminescence.

The excitation filter is operatively disposed between the excitation source and the examination region and configured to block passage of light that spectrally overlaps the photoluminescence. The system further comprises a detection subsystem including an image detector configured to detect an image formed by photoluminescence induced by the excitation light. The detection subsystem also includes an objective and an emission filter each operatively disposed in an optical path from the examination region to the image detector. The optical path extends through a central opening defined by the annular frame. The emission filter is configured to prevent excitation light generated by the excitation source from reaching the image detector. Further features are specified in claim 1.

The system of the present disclosure offers various advantages over those of the prior art. The advantages may include any combination of the following: (a) fewer moving parts, (b) a more compact optical design, (c) lower cost, (d) more illumination options, and/or (e) better performance, among others.

### Brief Description of the Drawings

Figure 1 is a schematic view of an exemplary imaging system with oblique illumination, in accordance with aspects of the present disclosure.
Figure 2 is a fragmentary, somewhat schematic elevation view of a first example of the imaging system of Figure 1, taken generally around an objective and a stage of the imaging system, and illustrating only selected aspects of an annular illumination assembly including a plurality of solid-state light sources arranged in a ring centered on the optical axis of the objective, in accordance with aspects of the present disclosure.
Figure 3 is a fragmentary elevation view of a second example of the imaging system of Figure 1, taken generally as in Figure 2, in accordance with aspects of the present disclosure.
Figure 4 is a sectional view of selected aspects of the imaging system of Figure 3, taken generally along line 4-4 of Figure 3 through a source assembly of the system in the absence of the objective, with the source assembly including an annular frame structured as a closed ring.
Figure 5 is another sectional view of selected aspects of the imaging system of Figure 3, taken generally along line 5-5 of Figure 3 toward the source assembly in the absence of the objective.
Figure 6 is a sectional view of selected aspects of another example of a source assembly for the imaging system of Figure 3, taken as in Figure 4 in the absence of the objective, with the source assembly having an annular frame structured as an open ring.
Figure 7 is a sectional view of only selected aspects of a third example of the imaging system of Figure 1, taken substantially parallel to the detection optical axis through an objective and an annular illumination assembly of the system, in accordance with aspects of the present disclosure.
Figure 8 is a sectional view of only selected aspects of an exemplary embodiment of the imaging system in accordance with the invention, taken substantially parallel to the detection optical axis through an objective and an annular illumination assembly of the system, in accordance with aspects of the present disclosure.
Figure 9 is a sectional view of only selected aspects of a fourth example of the imaging system of Figure 1, taken substantially parallel to the detection optical axis through an objective and an illumination assembly of the system, in accordance with aspects of the present disclosure.

### Detailed Description

The present disclosure provides an imaging system, including methods and apparatus, with oblique illumination. For better understanding of the invention, which is defined by the appended claims, herein disclosed is an exemplary method of imaging in which a sample may be illuminated obliquely with excitation light generated by only a subset of a plurality of light sources mounted to an annular frame. An image may be detected, with the image formed with photoluminescence induced in the sample by the excitation light and received from a central opening of the annular frame. In some embodiments, a different subset of the light sources may be energized, and another image (another photoluminescence image or a scattered light image) may be detected.

For better understanding of the invention, herein disclosed is another exemplary method of imaging. In the method, a sample may be illuminated obliquely with excitation light generated by at least one solid-state light source mounted to an annular frame. The excitation light may be spectrally filtered upstream of the sample. An image may be detected, where the image is formed with photoluminescence induced in the sample by the excitation light and received from a central opening of the annular frame.

For better understanding of the invention, herein disclosed is another exemplary method of imaging. In the method, a sample may be illuminated obliquely with excitation light generated by only a subset of a plurality of light sources, where the light sources are arranged in a circular array. An image may be detected, where the image is formed with photoluminescence induced in the sample by the excitation light and received from an area surrounded by the circular array. In some embodiments, a different subset of the light sources may be energized, and another image (another photoluminescence image or a scattered light image) may be detected.

For better understanding of the invention, herein disclosed is a method of high content screening. In the method, at least a portion of a well may be illuminated from below with light generated by at least one light source. The well may contain a plurality of biological cells. A darkfield image may be detected, with the darkfield image representing scattering of the light by one or more of the biological cells. The darkfield image may be processed to obtain one or more values corresponding to a phenotype of the biological cells.

Further aspects of the present disclosure are described in the following sections: (I) overview of microscope imaging systems with oblique illumination, (II) methods of imaging with oblique illumination, and (III) examples.

### I. Overview of Microscope Imaging Systems with Oblique Illumination

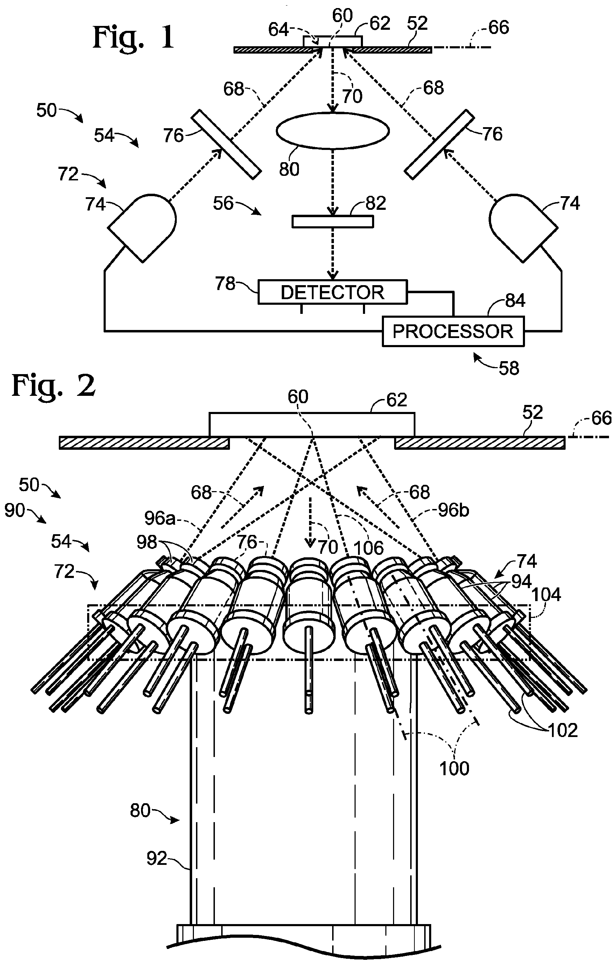

This section provides an overview of an exemplary microscope imaging system 50 configured to illuminate a sample obliquely; see Figure 1.

Imaging system 50 may include a stage 52, an illumination subsystem 54, a detection subsystem 56, and a control/processing subsystem 58, among others. Subsystems 54, 56, and 58 function cooperatively to enable photoluminescence imaging and/or darkfield imaging of a sample 60. (Photoluminescence includes any photo-induced emission of light, such as fluorescence, phosphorescence, and the like.)

Stage 52 is configured to support a sample holder 62, which, in turn, contains or otherwise holds one or more samples 60. The samples may be supported by stage 52 and sample holder 62 in an examination region 64 of a sample plane 66 (also called a specimen plane), which is parallel to and optionally close to an xy plane (a horizontal plane) defined by the system (e.g., by the stage). The stage may define an optically transparent region (e.g., an opening) directly under the examination region, to allow illumination and detection of samples using illumination and detection subsystems 54, 56 located below sample plane 66. In other examples, illumination and detection may be performed above sample plane 66.

Exemplary optical paths followed by optical radiation traveling respectively to and from sample 60 are represented in Figure 1 with dashed arrows. Illumination subsystem 54 irradiates sample 60 with optical radiation on at least one illumination optical path 68 (also called an irradiation optical axis) that is obliquely incident on the sample. In other words, optical path 68 intersects sample plane 66 obliquely (e.g., subtending an angle with plane 66 of about 10 to 80, 20 to 70, or 30 to 60 degrees, among others). Detection subsystem 56, on the other hand, may detect optical radiation traveling on a detection optical path 70 (also called a detection optical axis) that extends orthogonally from the sample (i.e., optical path 70 may intersect sample plane 66 orthogonally). The terms "optical radiation" and "light" are used interchangeably herein, and may include visible radiation, ultraviolet radiation, infrared radiation, or any combination thereof.

Illumination subsystem 54 may include only one light source or may include a source assembly 72 including a plurality of light sources 74 to irradiate sample 60 obliquely on respective optical paths 68 (with the optional assistance of operatively associated optics). Two light sources 74 of source assembly 72 are shown in Figure 1 irradiating sample 60 at the same time. However, as explained further below, different subsets of light sources 74 may be energized serially for photoluminescence imaging at different wavelengths and/or for collection of photoluminescence and darkfield images at different times. The terms "irradiate" and "illuminate" and corresponding forms thereof have the same meaning and are used interchangeably in the present disclosure.

Each light source may generate light by any suitable mechanism, including electroluminescence, stimulated emission, thermal radiation, and/or photoluminescence, among others. Accordingly, the light source may include a solid-state device, laser, filament/incandescent lamp, arc lamp, or the like. Exemplary solid-state devices include semiconductor light sources, such as light-emitting diodes (LEDs), superluminescent diodes, and laser diodes, among others.

The illumination subsystem may be configured to irradiate the examination region serially with spectrally different light generated by different subsets (also called sets) of one or more light sources 74. For example, illumination subsystem 54 may include two, three, four, or more sets of one or more light sources that can be energized serially (and/or in one or more combinations) to irradiate the examination region with two, three, four, or more different spectra, colors, wavebands, and/or wavelengths of light. Each set may be spectrally different from each other set due to differences in the spectra of light generated by the light sources and/or due to differences in how the generated light is filtered. For example, each set of light sources may generate light of a different color. Alternatively, or in addition, at least two sets of the light sources may generate light that is filtered differently (e.g., with spectrally different filters, or either filtered or not filtered). In some examples, each set may generate a broad range of wavelengths (e.g., a range of at least about 100, 150, or 200 nanometers, among others) and a spectral filter(s) 76 for each set may transmit a different waveband of the broad range to the examination region. As an example, each of the light sources may generate white light, which may be filtered differently for each set, such as filtered in one set to select only red light for sample illumination (e.g., for photoluminescence or darkfield imaging), in another set to select only blue light for sample illumination (e.g., for photoluminescence or darkfield imaging), and left unfiltered in yet another set to provide white light for sample illumination (e.g., for darkfield imaging). Each set of light sources may include 1, 2, 3, 4, 5, 6, or more light sources, optionally arranged on a circular path.

Illumination subsystem 54 may (or may not) remain fixed when imaging with different sets of the light sources. In some examples, each of the light sources and its operatively associated optics (e.g., a spectral filter or focusing element, if any) may be fixed with respect to the system's objective.

Illumination subsystem 54 may include one or more optical elements disposed in optical path 68 between each light source 74 and examination region 64. An optical element may be any device or structure that collects, directs, and/or focuses light and/or at least partially blocks light. An optical element may function by any suitable mechanism, such as reflection, refraction, scattering, diffraction, absorption, and/or filtering, among others. Exemplary optical elements include lenses, mirrors, diffusers, gratings, prisms, filters, apertures, masks, beamsplitters, transmissive fibers (fiber optics), and the like. Each optical element may be dedicated to a single light source 74, or shared by two or more light sources. For example, in Figure 1, a distinct spectral filter 76 (e.g., an excitation filter) is disposed in each optical path 68 from one of light sources 74 to sample 60. The filter blocks transmission of a spectral portion of light from its corresponding light source 74. However, filters may be omitted if the light sources generate no more than an insubstantial amount of light that spectrally overlaps the photoluminescence to be detected, or if only scattered light is to be detected. Further aspects of exemplary optical elements for illumination subsystem 54 are described elsewhere herein, such as in Section III.

Detection subsystem 56 includes an image detector 78, an objective 80, and, at least one emission filter 82. Each of objective 80 and emission filter 82 are disposed in detection optical path 70 between examination region 64 and the image detector. The detection subsystem also may include any other suitable optical elements, such as any combination of the optical elements described above, which may, for example, fold optical path 70 one or more times between the sample and the image detector.

Image detector 78 may be any device capable of detecting spatial variations in light across a detection area. The image detector may be an array detector, such as a charge-coupled device (CCD) sensor, an active pixel sensor (e.g., a complementary metal-oxide-semiconductor (CMOS) sensor, N-type metal-oxide-semiconductor (NMOS) sensor, etc.), or the like. The image detector may be configured to detect color images or grayscale (monochromatic) images.

Objective 80 may include any optical element or combination of optical elements that gathers light from the sample and focuses the light to produce an image to be detected, and any associated support structure(s). The objective can, for example, include a single lens, two or more lenses, a single mirror, two or more mirrors, and/or the like. Objective 80 may provide any suitable magnification, such as at least 4X, 10X, 20X, 50X, or 100X, among others. The objective may be an integrated unit including a housing that contains optical elements of the objective, and optically forms at least one of the optical elements. Each of the optical elements of the objective may be mounted to the housing. In some examples, the objective may include one or more tubes that form at least part of the housing. For example, the objective may include a plurality of lenses disposed inside a tube. The tube may define a through-axis on which detection optical path 70 extends through the objective. In embodiments in accordance with the present invention, the objective may include an inner tube and an outer tube, which may be connected to one another. The inner tube is located at least partially inside the outer tube and may be coaxial therewith. Source assembly 72 may be located at least partially inside a tube of the objective and/or around a tube of the objective.

Emission filter 82 may be a spectral filter that blocks transmission of light from at least one light source 74 to image detector 78. More particularly, the emission filter prevents excitation light that has reached sample 60 from traveling to image detector 78. Accordingly, excitation filter 76 and emission filter 82 collectively may prevent substantially the full spectrum of detectable light generated by a light source 74 from reaching image detector 78. Excitation filter 76 may block only a spectral portion of the detectable light from a light source, and emission filter 82 may block the spectral remainder of the light generated by the light source. Each spectral filter 76, 82 independently may, for example, be a cutoff filter or a bandpass filter.

Emission filter 82 may be fixed in detection optical path 70 or may be movable into and out of the optical path. Darkfield images can be detected with filtered "excitation" light so long as the emission filter that blocks excitation wavelengths during photoluminescence imaging is removed from the optical path, allowing scattered excitation light to reach the image detector. Accordingly, the same set of light sources may be energized for luminescence imaging and scattering darkfield imaging of the same sample (or field of view) or different samples (or fields of view) by moving the emission filter into and out of the detection optical path. In some embodiments, system 50 may have a plurality of spectrally distinct emission filters 82 that are operatively positionable in, and removable from, optical path 70, either individually or, optionally, in combination. For example, the emission filters may be arranged on a slider or a wheel. The system may be configured to automatically adjust the emission filter(s), if any, being used during image collection, and/or adjustment may be performed manually by the user, among others. In some cases, the system may select a suitable emission filter(s) for placement into optical path 70 according to the particular light source or set(s) of light sources 74 that is being used to illuminate the sample. In some embodiments, the emission filters may include an adjustable set of filters that permit colorimetric imaging with a grayscale image detector (e.g., collection of red, green, and blue images that are electronically combined to create a color image).

Control/processing subsystem 58 may be in communication with and/or may control operation of any suitable combination of devices of system 50, such as light sources 74 and image detector 78. Subsystem 58 may include a processor 84, which may receive and process image data from image detector 78, and may control operation of the image detector, such as the timing of image detection. Processor 84 further may control an objective drive mechanism and/or a stage drive mechanism, if present. Control of these drive mechanisms may allow the system to automate imaging of multiple samples, and/or multiple locations within the same sample. The processor also may control energization of different sets of light sources 74, and thus collection of photoluminescence images and darkfield images.

Processor 84 may be provided by a computer. The computer may include a display, a user interface, memory to store algorithms and data, and the like.

The imaging system also has a source of power to drive operation of each of the devices thereof (e.g., each light source, the image detector, the processor, drive mechanisms, etc.). The power may, for example, be line power, battery power, or a combination thereof.

Sample 60 may include any suitable assembly, material, substance, isolate, extract, particle, or the like. For example, the sample may include biological cells and/or tissue to be imaged. The biological cells may be eukaryotic or prokaryotic, and may be alive or dead (e.g., fixed). Exemplary biological cells include established cells (cell lines), primary cells, cells from a tissue sample, cells from a clinical sample (e.g., a blood sample, a fluid aspirate, a tissue section, etc.), bacterial cells, or the like. The cells may produce a photoluminescent component (e.g., green fluorescent protein (GFP)) or may be stained with a photoluminescent component (e.g., a photoluminescent dye or particle, optionally after cells have been fixed). Exemplary photoluminescent dyes include acridine dyes, cyanine dyes, fluorone dyes, oxazine dyes, phenanthridine dyes, and rhodamine dyes, among others. Each photoluminescent component may, for example, include a photoluminophore and a specific binding agent. Exemplary photoluminescent particles includes quantum dots.

Sample holder 62 may be any device for holding at least one sample or any array of spatially isolated samples. The sample holder may provide a substrate having at least one horizontal, upwardly-facing surface region on which biological cells or tissue of a sample may rest and/or be attached. The sample holder may have only one surface region for cell/tissue attachment, or multiple surface regions or compartments separated from one another. Each surface region may include a coating to encourage cell/tissue attachment. The coating may, for example, be poly-lysine, collagen, or the like. The coating may be located on a body of the sample holder, which may be formed of transparent plastic or glass, among others. Exemplary sample holders include slides, culture dishes, multi-well plates (e.g., having 4, 6, 8, 12, 24, 32, 48, or 96 wells, among others), or the like.

Further aspects of imaging system 50, including exemplary embodiments thereof and methods of using the system for imaging, are described below in Sections II and III.

### II. Methods of Imaging with Oblique Illumination

This section describes methods of imaging samples that are illuminated obliquely. The steps presented in this section may be performed in any suitable order and combination, using any of the system components and features described elsewhere herein.

A sample (e.g., containing biological cells) and/or an examination region may be illuminated with light generated by one or more energized light sources. The energized light sources may be members of a ring of light sources and/or may be mounted to an annular frame. The annular frame may be closed, to create a circumferentially-bounded central opening (a central window), or open, with a central window that is open laterally. The light may or may not be filtered spectrally in the optical path followed by the light from each energized light source to the sample.

An image may be detected. The image may be formed (at least in part) with light received from the central window of the annular frame and/or from an area surrounded by a circular array of light sources that includes the energized light sources. The image may be formed at least predominantly with photoluminescence or scattered light received from the sample and/or examination region. In some examples, a plurality of images, of the same field of view or different fields of view, may be collected while different subsets of light sources are energized.

In some examples, two or more images of the same field of view may be combined (e.g., electronically). The two or more images may be detected during illumination with different sets of light sources and may be of the same type (e.g., each may be a photoluminescence image or each may be a darkfield image) or different types (e.g., a photoluminescence image combined with a darkfield image).

Each image may be processed. Processing the image may include processing pixel values of a digital image. The processing may include cell identification (e.g., defining the boundary of each biological cell or cell region (such as an organelle(s) thereof)) in the image. The processing also may include determining a signal value for the cell or cell region, a shape and/or size of the cell or cell region, and/or the like in the image, which alone or collectively with other signal values from the image may define at least one phenotype of one or more biological cells. The phenotype may, for example, relate to the level and/or subcellular location/distribution of a target of interest in, on, and/or about, the cells. The target may be a protein, amino acid, nucleic acid, carbohydrate, lipid, small molecule, virus, etc.

Each sample containing biological cells may be contacted with one or more test compounds before detection of an image. A phenotype of the cells may be correlated with each test compound to determine whether the test compound affected the phenotype relative to a control. Accordingly, the imaging system may be used to screen a library of test compounds for their effects on biological cells held by the wells of one or more multi-well plates.

### III. Examples

The following examples describe selected examples and embodiments of the present disclosure related to imaging systems with oblique illumination of samples, and methods of using the systems to perform imaging. Any suitable aspects of these systems and methods may be combined with one another and with the systems and methods described elsewhere herein (e.g., in Sections I and II). These examples are included for illustration and are not intended to limit or define the entire scope of the present disclosure. The scope of the present invention is defined by the appended claims.

### Example 1. Imaging System with Obliquely-Oriented LEDs

This example describes a first example 90 of imaging system 50, with the system having a source assembly with obliquely-oriented light-emitting diodes (LEDs) as light sources; see Figure 2 (also see Figure 1).

Imaging system 90 has an illumination subsystem 54 incorporating an annular source assembly 72 mounted to a housing 92 of an objective 80. Source assembly 72 is centered on detection optical path 70.

The source assembly has a plurality of solid-state light sources 74, namely, LEDs 94. The flux of light 96a, 96b (e.g., excitation light) from the source assembly is indicated in Figure 2 for only two LEDs 94, with the light traveling along respective illumination optical paths 68 from the two LEDs. However, any suitable number of the LEDs may be on (energized) at the same time. Energizing multiple LED copies, each having the same spectral output, can increase flux and homogenize irradiance by superimposing their cones of light.

Light generated by any of LEDs 94 may (or may not) be spectrally filtered with a filter 76 disposed in the optical path to sample plane 66, to remove a spectral portion of the generated light. Filter 76 may be attached to a substrate that forms a lens 98 positioned to concentrate flux from the LED at sample plane 66. Lens 98 (and/or filter 76) may be dedicated to a single LED 94 or may be shared among two or more LEDs (see below). As described above in Section I, the light sources may form two or more sets that illuminate the sample with spectrally different light.

The LEDs are arranged along a circular path that extends around optical path 70, with the circular path defining a plane that is parallel to sample plane 66 and orthogonal to detection optical path 70. Each LED 94 defines a central axis 100 along which generated light leaves the LED. The central axis may be oblique to sample plane 66 and detection optical path 70, as shown here, or respectively orthogonal and parallel to plane 66 and detection optical path 70, as described below. Central axis 100 of an LED may be coaxial with illumination optical path 68 extending from the LED to the sample plane, or one or more optical elements disposed in path 68 (e.g., lens 98) may cause optical path 68 to diverge from central axis 100.

Each LED 94 in Figure 2 is shown schematically with its pair of conductive leads 102 exposed. However, each LED 94 may be mounted to an annular frame 104, indicated schematically in phantom outline. The annular frame may hold the LEDs in a circular array around objective 80, may orient central axis 100 of each LED, and may enable connection of leads 102 to electrical circuitry. Accordingly, the annular frame may be a circuit board and a support.

A collected portion 106 of photoluminescence (or scattered light) resulting from irradiation with light 96a, 96b follows detection optical path 70 into objective 80. The collected portion may be spectrally filtered with an emission filter and detected with an image detector, as described above in Section I.

### Example 2. Imaging System with Parallel LEDs

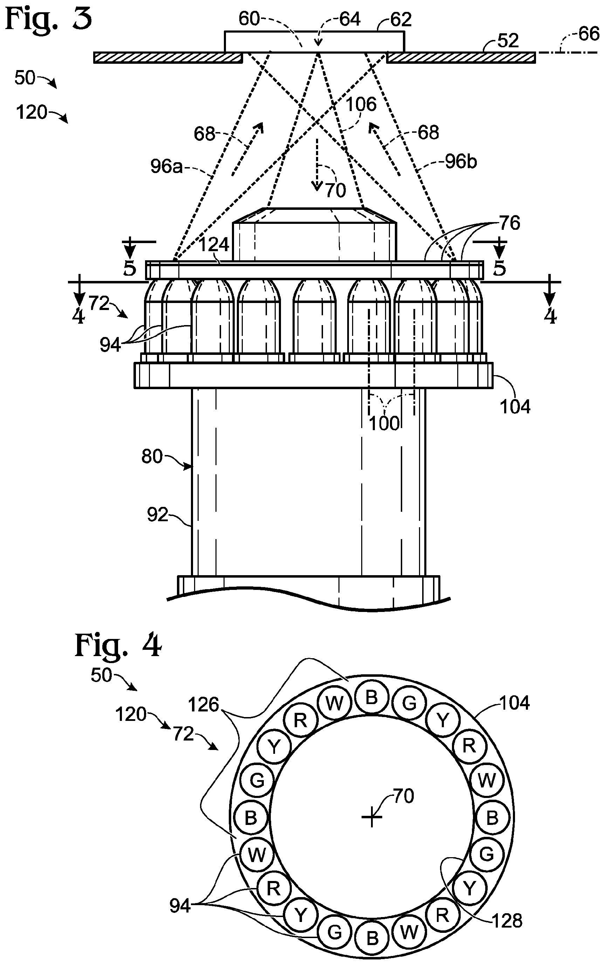

This example describes a second example 120 of imaging system 50, with the system having a source assembly with parallel LEDs as light sources; see Figures 3-6 (also see Figure 1).

Imaging system 120 is constructed generally as described above for imaging system 90 of Figure 2 but has a different source assembly 72. Annular frame 104 holds LEDs 94 in a ring, as in the source assembly of imaging system 120, but central axes 100 of the LEDs are parallel to one another, orthogonal to sample plane 66, and parallel to detection optical path 70. Also, dedicated lenses 98 of imaging system 90 in Figure 2 are replaced by a single shared Fresnel lens 124 that is configured to focus a beam of light from each LED onto sample plane 66. The Fresnel lens may provide a substrate to which each spectral filter 76 is attached, e.g., as a coating on the non-grooved side of the lens.

Figure 4 shows a plan view of source assembly 72 of imaging system 120 taken in the absence of Fresnel lens 124 and filters 76. Annular frame 104 supports a circular array of LEDs 94 that generate light of five different colors, namely, blue (B), green (G), yellow (Y), red (R), and white (W). The LEDs of each B, G, Y, R, or W set may be interspersed with the LEDs of each other set along a circular path defined by the array. In the depicted example, the LEDs are arranged in n sectors 126 each including an LED of each color, with the order of LED color repeated in each sector, where n is the number of LEDs in each set (and is equal to four in the depicted example). Also, the LEDs of a given set may be uniformly spaced from each other along the circular path to produce rotational symmetry and thus more uniform illumination of the examination region. The LEDs of the set may have an angular spacing from one another, as defined with optical path 70 as a vertex, equal to 360/n degrees. For example, in the depicted examples, *n* is equal to four, and the LEDs of each set are angularly offset by 90 degrees from one another.

The LEDs may be turned on in any suitable combination for imaging a field of view. Generally, all of the LEDs of the same set are turned on (and off) at the same time. In some examples, the LEDs of two or more of the sets may be turned on at the same time for detection of a single image.

Annular frame 104 may form a closed ring, as shown here, or an open ring (see below). The annular frame defines a central opening 128, which may or may not be completely bounded circumferentially by the annular frame. Detection optical path 70 extends through central opening 128, such that light detected by the image detector has passed through central opening. The central opening may receive a portion of objective 80, or the objective and annular frame may be offset and non-overlapping with each other along optical path 70.

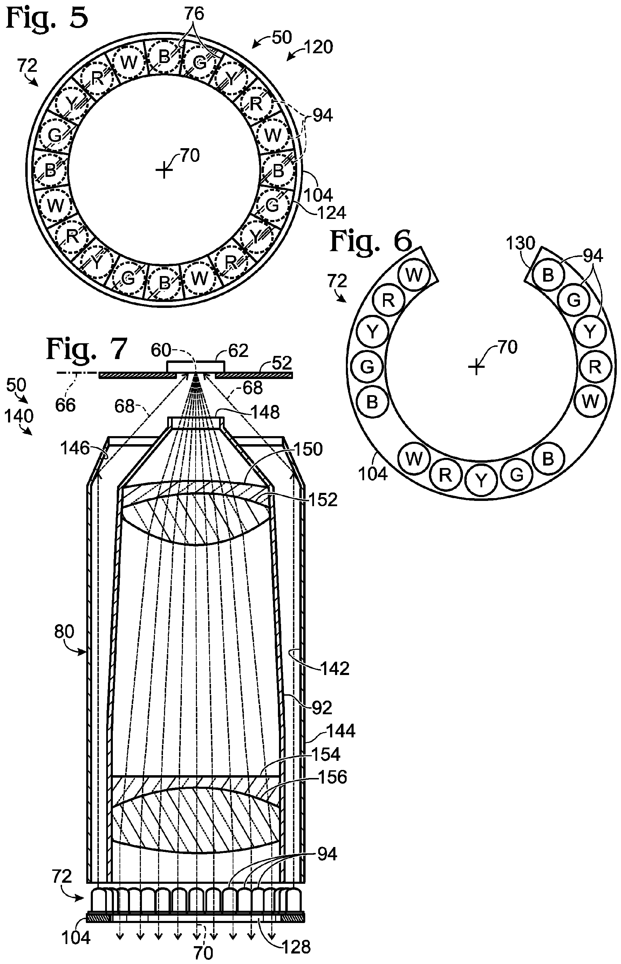

Figure 5 shows a plan view of source assembly 72 of imaging system 120 taken in the presence of Fresnel lens 124 and filters 76. The filters may be attached to the top surface of lens 124 in alignment with individual LEDs. The filters may have a spectral range or cutoff that is specific to each color of LED. For example, a blue cutoff filter may be aligned with each blue (B) LED, a green cutoff filter with each green (G) LED, and so on. One of more sets of LEDs may be unfiltered. For example, in the depicted example, the white (W) LEDs do not have overlying filters. In other examples, the LEDs (e.g., white LEDs) may have a broad spectral range of generated light, and each of filters 76 may be a bandpass filter (e.g., a blue bandpass filter, a green bandpass filter, a yellow bandpass filter, or a red bandpass filter) that permits only a desired waveband to pass through.

In some examples, Fresnel lens 124 may be replaced by a conventional lens having an axial hole sized to admit the objective. The conventional lens may have a coating that creates an excitation filter, or a plurality of coatings that create spectrally different transmission bands at different positions around the lens.

Figure 6 shows another exemplary source assembly 72 for imaging system 120. The source assembly has an annular frame 104 structured as an open ring forming a gap 130 between ends of the ring. The frame extends along a majority of a circular path, such as at least three-fourths of a full circle.

### Example 3. Imaging System with Illumination via an Objective

This example describes a third example 140 of imaging system 50, with the system having an objective 80 that transmits light from an annular source assembly 72 to the sample; see Figure 7 (also see Figure 1).

Source assembly 72 of imaging system 140 is structured generally as in imaging system 120 but is located near or at the bottom end of objective 80. Also, the Fresnel lens of imaging system 120 is eliminated. Light generated by the source assembly travels to sample plane 66 via a tubular space 142 created in objective 80 between an inner tube or housing 92 and an outer tube 144. The inner and outer tubes may be attached to and arranged coaxially with one another. The inner tube may be at least partially, at least predominantly, or completely contained by outer tube 144. LEDs 94 and/or annular frame 104 may be at least partially located in tubular space 142. For example, annular frame 104 may be abutted with the bottom end of the inner tube and/or outer tube. Alternatively, source assembly 72 may be aligned with, but located outside of, tubular space 142.

Light from each energized LED 94 may travel along a respective optical path 68 to an optical element 146 formed by and/or located inside outer tube 144, which focuses the light onto the examination region of sample plane 66. Optical element 146 may be a tapered mirror, such as a frustoconical mirror or reflective truncated paraboloid, which may be created by a tapered or shaped, interior end region of outer tube 144. Here, and in Examples 4 and 5, optical element 146 may be replaced by a Fresnel lens or another refractive/diffractive element attached to and/or disposed at least partially inside outer tube 144.

Photoluminescence or scattered light from the examination region is received by inner tube 92. The received radiation passes through a series of lenses 148, 150, 152, 154, and 156 contained by inner tube 92, through central opening 128 of source assembly 72, and then continues on optical path 70 to the image detector of the system. Excitation filters may or may not be included. The filters, if present, may be disposed at any suitable operative position in optical path 68.

### Example 4. Imaging System with Objective-Contained Source Assembly

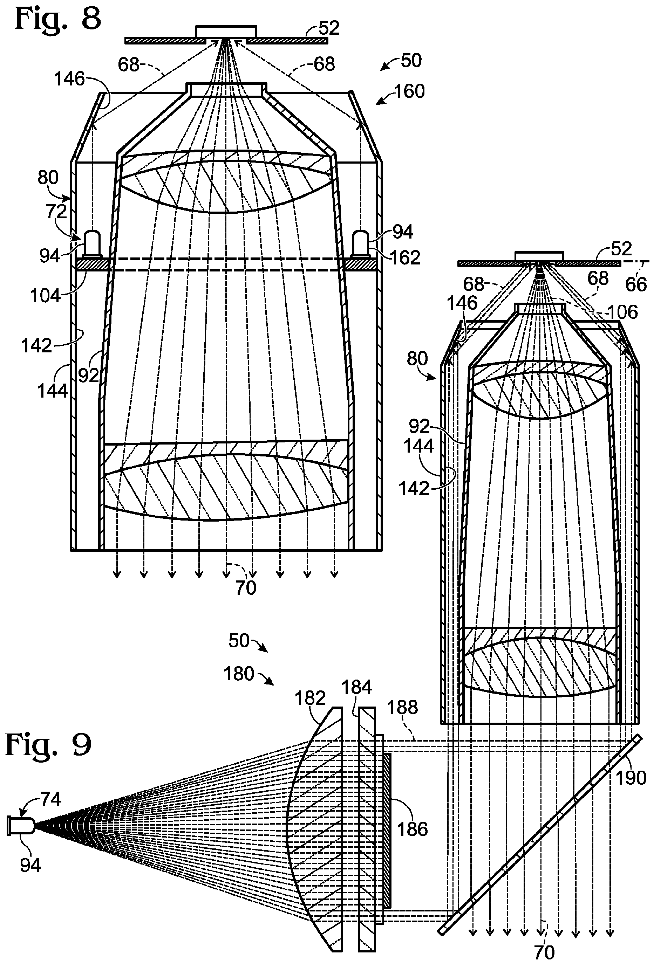

This example describes an exemplary embodiment 160 of an imaging system 50 in accordance with the present invention, with the system having an objective that contains an annular source assembly; see Figure 8 (also see Figure 1).

Figure 8 shows a sectional view of imaging system 160. Source assembly 72 of imaging system 160 is structured generally as in imaging system 120 (see Figures 3-5) but is located in a tubular space 142 of objective 80, between an inner tube 92 and an outer tube 144. An annular frame 104 of the source assembly encircles the inner tube. The Fresnel lens of imaging system 120 has been eliminated, due to the presence of a reflective focusing optical element 146, and excitation filters may be attached directly to a housing 162 of each LED 94.

### Example 5. Imaging System with Annular Light Beam

This example describes a fourth example 180 of imaging system 50, with the system having an illumination subsystem that creates an annular light beam by masking the central portion of a non-annular beam; see Figure 9 (also see Figure 1).

Figure 9 shows a sectional view of imaging system 180. A single light source 74 generates excitation light that travels through tubular space 142 of objective 80 to the examination region of sample plane 66. More particularly, the excitation light is transmitted through a collimating lens 182 (optionally aspheric, optionally Fresnel), an excitation filter 184, and a mask 186, which results in a filtered, annular beam 188. The annular beam is reflected by a dichroic mirror 190 into an annular space 142 inside objective 80, and is then focused by a reflective optical element 146 onto sample plane 66 for oblique illumination of a sample. A collected portion 106 of the resulting photoluminescence then passes through the lenses of the objective, and through dichroic mirror 190, along optical path 70 to the image detector.

### Example 6. Selected Examples

This example describes selected examples of the present disclosure as a series of indexed paragraphs The scope of the present invention is defined by the appended claims.
Paragraph A1. A method of imaging, the method comprising: (a) illuminating a sample obliquely with excitation light generated by at least one solid-state light source mounted to an annular frame, the excitation light being spectrally filtered upstream of the sample; and (b) detecting an image formed with photoluminescence induced by the excitation light and received from a central opening of the annular frame.
Paragraph A2. The method of paragraph A1, wherein the step of illuminating is performed with excitation light generated by two or more solid-state light sources each mounted to the annular frame and arranged along a circular path created by the annular frame.
Paragraph A3. The method of paragraph A1 or A2, wherein a plurality of solid-state light sources are mounted to the annular frame, and wherein the plurality of solid-state light sources includes two sets of one or more light sources having different spectra of generated light.
Paragraph A4. The method of paragraph A1 or A2, wherein a plurality of solid-state light sources are mounted to the annular frame, wherein the plurality of solid-state light sources includes a first set of one or more light sources and a second set of one or more light sources, wherein the first set and the second set each produce white light, and wherein energizing each set illuminates the sample with spectrally different light.
Paragraph A5. The method of paragraph A3 or A4, wherein only one set of the two sets is energized during the step of illuminating.
Paragraph A6. The method of paragraph A5, the step of illuminating being a first step of illuminating and the image being a first image, further comprising a second step of illuminating the same sample or a different sample using light generated by the other set of one or more light sources, and a step of detecting a second image during the second step of illuminating.
Paragraph A7. The method of paragraph A6, wherein the second image is a darkfield image created with scattered light.
Paragraph A8. The method of paragraph A6, wherein the second image is a photoluminescence image.
Paragraph A9. The method of paragraph A1, further comprising a step of illuminating the same sample or a different sample obliquely with light generated by the at least one solid-state light source, and a step of detecting a darkfield image created with a scattered portion of the light.
Paragraph A10. The method of paragraph A9, wherein the step of detecting an image formed with photoluminescence is performed while an emission filter is present in a detection optical path to an image detector, and wherein the step of detecting a darkfield image is performed with the emission filter removed from the detection optical path.
Paragraph B1. A method of imaging, the method comprising: (a) illuminating a sample obliquely with excitation light generated by only a subset of a plurality of light sources mounted to an annular frame; and (b) detecting an image formed with photoluminescence induced in the sample by the excitation light and received from a central opening of the annular frame.
Paragraph B2. The method of paragraph B1, wherein the excitation light is spectrally filtered upstream of the sample, and wherein the photoluminescence is spectrally filtered upstream of an image detector that detects the image.
Paragraph B3. The method of paragraph B1 or B2, further comprising a step of passing the photoluminescence through an objective including a tube containing one or more optical elements, wherein the annular frame extends around the tube.
Paragraph B4. The method of paragraph B3, the tube being an inner tube, wherein the plurality of light sources are located in an outer tube that contains at least part of the inner tube.
Paragraph B5. The method of any of paragraphs B1 to B4, wherein the step of illuminating a sample includes a step of illuminating biological cells.
Paragraph B6. The method of paragraph B5, wherein the step of illuminating biological cells includes a step of illuminating biological cells stained with a photoluminescent dye.
Paragraph B7. The method of any of paragraphs B1 to B6, wherein the step of illuminating a sample includes a step of illuminating a sample with excitation light generated by a solid-state light source.
Paragraph B8. The method of any of paragraphs B1 to B7, the subset being a first subset, further comprising a step of illuminating the sample with spectrally different light generated by a second subset of the plurality of light sources, and a step of detecting a darkfield image of the sample formed with a scattered portion of the light generated by the second subset.
Paragraph B9. The method of paragraph B8, wherein the step of detecting a darkfield image includes a step of passing the scattered portion of the light through a central opening of the annular frame at a position upstream of an image detector that detects the darkfield image.
Paragraph B10. The method of any of paragraphs B1 to B9, the step of illuminating being a first step of illuminating with excitation light of a first color, and the image being a first photoluminescence image, further comprising a second step of illuminating the same sample or a different sample with excitation light of a second color generated by a different subset of the plurality of light sources, and a step of detecting a second photoluminescence image formed with photoluminescence induced by excitation light of the second color.
Paragraph B11. The method of any of paragraphs B1 to B10, wherein the step of illuminating a sample includes a step of illuminating the sample with a first subset of the plurality of light sources having a first spectrum of generated light, and wherein the first subset is interspersed along a circular path with a second subset of the plurality of light sources having a second spectrum of generated light.
Paragraph B12. The method of any of paragraphs B1 to B11, further comprising a step of focusing the excitation light onto the sample using an optical element formed by or located inside a tube.
Paragraph B13. The method of any of paragraphs B1 to B12, further comprising a step of detecting a darkfield image formed with a scattered portion of light generated by the subset of light sources.
Paragraph B14. The method of paragraph B13, wherein the step of detecting an image formed with photoluminescence is performed while an emission filter is present in a detection optical path to an image detector, and wherein the step of detecting a darkfield image is performed with the emission filter removed from the detection optical path.
Paragraph C1. An imaging system, comprising: (a) a stage to support a sample in an examination region, wherein the sample includes a photoluminescent component; (b) an illumination subsystem including a plurality of light sources mounted to an annular frame, at least one of the light sources being an excitation source that generates excitation light capable of inducing the photoluminescent component to produce photoluminescence, wherein an excitation filter is operatively disposed between the excitation source and the examination region and is configured to block passage of light that spectrally overlaps the photoluminescence; and (c) a detection subsystem including an image detector configured to detect an image formed by photoluminescence induced by the excitation light, the detection subsystem also including an objective and an emission filter each operatively disposed in an optical path from the examination region to the image detector, wherein the optical path extends through a central opening defined by the annular frame, and wherein the emission filter is configured to prevent excitation light generated by the excitation source from reaching the image detector.
Paragraph C2.The imaging system of paragraph C1, wherein the objective includes a housing containing one or more optical elements, and wherein the annular frame extends around the housing.
Paragraph C3. The imaging system of paragraph C1 or C2, wherein the objective includes an inner tube disposed at least partially inside an outer tube, and wherein the annular frame and/or the plurality of light sources are disposed at least partially in a space defined between an exterior surface of the inner tube and an interior surface of the outer tube.
Paragraph C4. The imaging system of paragraph C3, wherein the outer tube has a reflective region configured to focus excitation light onto the examination region.
Paragraph C5. The imaging system of paragraph C4, wherein the reflective region is created by or attached to a tapered end of the outer tube.
Paragraph C6. The imaging system of any of paragraphs C1 to C5, wherein the annular frame is a closed ring.
Paragraph C7. The imaging system of any of paragraphs C1 to C6, wherein the sample includes biological cells.
Paragraph C8. The imaging system of paragraph C7, wherein the biological cells are stained with or express the photoluminescent component.
Paragraph C9. The imaging system of any of paragraphs C1 to C8, wherein the stage defines a horizontal plane, and wherein the objective is disposed below the horizontal plane.
Paragraph C10. The imaging system of any of paragraphs C1 to C9, wherein each light source of the plurality of light sources is a solid-state light source.
Paragraph C11. The imaging system of any of paragraphs C1 to C10, wherein the plurality of light sources includes a first set of one or more light sources and a second set of one or more light sources, and wherein each set is configured to illuminate the examination region with spectrally different light.
Paragraph C12. The imaging system of paragraph C11, wherein the first set and the second set have different spectra of generated light.
Paragraph C13. The imaging system of paragraph C11, wherein the first set and the second set generate white light, and wherein the white light generated by the first set is spectrally filtered differently than the white light generated by the second set.
Paragraph C14. The imaging system of any of paragraphs C11 to C13, wherein the first set includes two or more light sources and the second set includes two or more light sources, and wherein the first set and the second set are interspersed with one another along a circular path.
Paragraph C15. The imaging system of any of paragraphs C11 to C14, wherein the plurality of light sources also includes a third set of one or more light sources, and wherein each of the first, second, and third sets is configured to illuminate the examination region with spectrally different light.
Paragraph C16. The imaging system of any of paragraphs C11 to C15, wherein light generated by each light source of the first set is filtered by an excitation filter upstream of the examination region, and wherein light generated by each light source of the second set is not filtered upstream of the examination region.
Paragraph C17. The imaging system of any of paragraphs C11 to C16, wherein the imaging system is configured to permit a user to energize the first set of light sources without energizing the second set of light sources, and vice versa.
Paragraph C18. The imaging system of any of paragraphs C1 to C17, wherein the illumination subsystem includes a same Fresnel lens operatively disposed in an optical path between each light source and the examination region.
Paragraph C19. The imaging system of any of paragraphs C1 to C18, wherein two or more of the plurality of light sources are each operatively associated with a distinct, corresponding excitation filter.
Paragraph C20. The imaging system of any of paragraphs C1 to C19, wherein the emission filter is removable from the optical path to allow a darkfield image to be detected with the image detector while the at least one light source is generating light.
Paragraph D1. A method of screening, the method comprising: (a) illuminating at least a portion of a well from below with light generated by at least one light source, the well containing a plurality of biological cells; (b) detecting a darkfield image representing scattering of the light by one or more of the biological cells; and (c) processing the darkfield image to obtain one or more values corresponding to a phenotype of the biological cells.
Paragraph D2. The method of paragraph D1, further comprising a step of contacting the biological cells with a test compound before the step of detecting a darkfield image, and a step of determining an effect, if any, of the test compound on the phenotype.
Paragraph D3. The method of paragraph D1 or D2, wherein an objective is operatively disposed in an optical path extending from the well to an image detector that detects the darkfield image, and wherein the step of illuminating at least a portion of a well is performed with the at least one light source mounted to an annular frame, and wherein the optical path extends through a central opening of the annular frame between the well and the image detector.
Paragraph D4. The method of any of paragraphs D1 to D3, wherein the well is provided by a multi-well sample holder, further comprising a step of repeating the steps of illuminating, detecting, and processing for each of a plurality of wells of the sample holder.
Paragraph D5. The method of paragraph D4, further comprising a step of contacting biological cells in each well with a different test compound.

Specific embodiments as disclosed and illustrated herein are not to be considered in a limiting sense, because numerous variations are possible within the scope of the appended claims. Further, ordinal indicators, such as first, second, or third, for identified elements are used to distinguish between the elements, and do not indicate a particular position or order of such elements, unless otherwise specifically stated.

## Claims

1. An imaging system (50), comprising:
a stage (52) configured to support a sample (60) in an examination region (64), wherein the sample includes a photoluminescent component;
an annular frame (104) and an excitation filter (76);
an illumination subsystem (54) including a plurality of light sources (74) mounted to the annular frame (104), at least one of the light sources (74) being an excitation source configured to generate excitation light capable of inducing the photoluminescent component to produce photoluminescence, wherein the excitation filter (76) is operatively disposed between the excitation source and the examination region (64) and is configured to block passage of light that spectrally overlaps the photoluminescence; and
a detection subsystem (56) including an image detector (78) configured to detect an image formed by photoluminescence induced by the excitation light, the detection subsystem (56) also including an objective (80) and an emission filter (82) each operatively disposed in an optical path (70) from the examination region (64) to the image detector (78), wherein the optical path (70) extends through a central opening (128) defined by the annular frame (104), and wherein the emission filter (82) is configured to prevent excitation light generated by the excitation source (74) from reaching the image detector (78),
wherein the objective (80) includes an inner tube (92) disposed at least partially inside an outer tube (144),
**characterized in that**
the imaging system (50) further comprises an optical element (146) configured to focus the light generated by the light sources onto the examination region of sample plane (66), wherein said optical element (146) is formed by and/or located inside the outer tube (144), the plurality of light sources (74), or the annular frame (104) and the plurality of light sources (74), are disposed at least partially in a tubular space (142) defined between an exterior surface of the inner tube (92) and an interior surface of the outer tube (144) such that light generated by the plurality of light sources (74) can travel along a respective optical path (68) via the tubular space (142) to the optical element (146) which focuses the light onto the examination region of sample plane (66).

2. The imaging system of claim 1, wherein the optical element (146) is formed by the outer tube (144) and is a tapered mirror which is created by a tapered or shaped, interior end region of the outer tube (144).

3. The imaging system of claim 2, wherein the tapered mirror is a frustoconical mirror or a reflective truncated paraboloid.

## Patentansprüche

1. Ein Abbildungs-System (50), das aufweist:
ein Gestell (52), das konfiguriert ist zum Tragen einer Probe (60) in einem Untersuchungsbereich (64), wobei die Probe eine photolumineszierende Komponente enthält;
einen ringförmigen Rahmen (104) und einen Anregungsfilter (76);
ein Beleuchtungs-Subsystem (54), das eine Vielzahl von Lichtquellen (74) enthält, die an dem ringförmigen Rahmen (104) befestigt sind, wobei mindestens eine der Lichtquellen (74) eine Anregungsquelle ist, die so konfiguriert ist, dass sie Anregungslicht erzeugt, das in der Lage ist, die photolumineszierende Komponente zur Erzeugung von Photolumineszenz zu induzieren, wobei der Anregungsfilter (76) operativ zwischen der Anregungsquelle und dem Untersuchungsbereich (64) angeordnet ist und so konfiguriert ist, dass er den Durchgang von Licht blockiert, das die Photolumineszenz spektral überlappt; und
ein Detektions-Subsystem (56) mit einem Bilddetektor (78), der so konfiguriert ist, dass er ein Bild erfasst, das durch Photolumineszenz gebildet wird, die durch das Anregungslicht induziert wird, wobei das Detektions-Subsystem (56) auch ein Objektiv (80) und einen Emissionsfilter (82) umfasst, die jeweils operativ in einem Strahlengang (70) von dem Untersuchungsbereich (64) zu dem Bilddetektor (78) angeordnet sind, wobei sich der Strahlengang (70) durch eine zentrale Öffnung (128) erstreckt, die durch den ringförmigen Rahmen (104) definiert ist, und wobei der Emissionsfilter (82) so konfiguriert ist, dass er verhindert, dass von der Anregungsquelle (74) erzeugtes Anregungslicht den Bilddetektor (78) erreicht,
wobei das Objektiv (80) ein inneres Rohr (92) beinhaltet, das zumindest teilweise innerhalb eines äußeren Rohres (144) angeordnet ist,
**dadurch gekennzeichnet, dass**
das Abbildungs-System (50) ferner ein optisches Element (146) aufweist, das so konfiguriert ist, dass es das von den Lichtquellen erzeugte Licht auf den Untersuchungsbereich der Probenebene (66) fokussiert, wobei das optische Element (146) gebildet ist durch das äußere Rohr (144) und/oder innerhalb des äußeren Rohres (144) angeordnet ist,
wobei die Vielzahl von Lichtquellen (74) oder der ringförmige Rahmen (104) und die Vielzahl von Lichtquellen (74) zumindest teilweise in einem rohrförmigen Hohlraum (142) angeordnet sind, der zwischen einer Außenfläche des inneren Rohres (92) und einer Innenfläche des äußeren Rohres (144) definiert ist, so dass sich Licht, das von der Vielzahl von Lichtquellen (74) erzeugt wird, entlang eines jeweiligen Strahlenganges (68) über den rohrförmigen Hohlraum (142) zum optischen Element (146) bewegen kann, welches das Licht auf den Untersuchungsbereich der Probenebene fokussiert (66).

2. Das Abbildungs-System nach Anspruch 1, wobei das optische Element (146) durch das äußere Rohr (144) gebildet ist und ein konischer Spiegel ist, der geschaffen ist durch einen sich verjüngenden oder einen geformten innenliegenden Endbereich des äußeren Rohres (144).

3. Das Abbildungs-System nach Anspruch 2, wobei der sich verjüngende Spiegel ein kegelstumpfförmiger Spiegel oder ein reflektierendes abgestumpftes Paraboloid ist.

## Revendications

1. Système d'imagerie (50), comprenant :
une platine (52) configurée pour porter un échantillon (60) dans une région d'examen (64), dans lequel l'échantillon inclut un composant photoluminescent ;
un cadre annulaire (104) et un filtre d'excitation (76) ;
un sous-système d'éclairage (54) incluant une pluralité de sources de lumière (74) montées sur le cadre annulaire (104), au moins l'une des sources de lumière (74) étant une source d'excitation configurée pour générer une lumière d'excitation apte à induire la production d'une photoluminescence du composant photoluminescent, dans lequel le filtre d'excitation (76) est disposé de manière fonctionnelle entre la source d'excitation et la région d'examen (64) et est configuré pour bloquer le passage d'une lumière qui chevauche de manière spectrale la photoluminescence ; et
un sous-système de détection (56) incluant un détecteur d'image (78) configuré pour détecter une image formée par photoluminescence induite par la lumière d'excitation, le sous-système de détection (56) incluant également un objectif (80) et un filtre d'émission (82) disposés chacun de manière fonctionnelle dans un chemin optique (70) de la région d'examen (64) au détecteur d'image (78), dans lequel le chemin optique (70) s'étend à travers une ouverture centrale (128) définie par le cadre annulaire (104), et dans lequel le filtre d'émission (82) est configuré pour empêcher une lumière d'excitation générée par la source d'excitation (74) d'atteindre le détecteur d'image (78),
dans lequel l'objectif (80) inclut un tube interne (92) disposé au moins partiellement à l'intérieur d'un tube externe (144),
**caractérisé en ce que**
le système d'imagerie (50) comprend en outre un élément optique (146) configuré pour focaliser la lumière générée par les sources de lumière sur la région d'examen de plan d'échantillon (66), dans lequel ledit élément optique (146) est formé par et/ou situé à l'intérieur du tube externe (144), de la pluralité de sources de lumière (74), ou du cadre annulaire (104), et la pluralité de sources de lumière (74) sont disposées au moins partiellement dans un espace tubulaire (142) défini entre une surface extérieure du tube interne (92) et une surface intérieure du tube externe (144) de sorte qu'une lumière générée par la pluralité de sources de lumière (74) peut se déplacer le long d'un chemin optique respectif (68) via l'espace tubulaire (142) jusqu'à l'élément optique (146) qui focalise la lumière sur la région d'examen de plan d'échantillon (66).

2. Système d'imagerie selon la revendication 1, dans lequel l'élément optique (146) est formé par le tube externe (144) et est un miroir fuselé qui est créé par une région d'extrémité intérieure, fuselée ou façonnée, du tube externe (144).

3. Système d'imagerie selon la revendication 2, dans lequel le miroir fuselé est un miroir tronconique ou un paraboloïde tronqué réfléchissant.
